# EUROPEAN PATENT APPLICATION

(11) **EP 3 444 310 A1**
(43) Date of publication of application: **20.02.2019**
(21) Application number: 17186201.4
(22) Date of filing: 14.08.2017
(51) Int. Cl.: C09J 103/00, C09J 103/02, C08L 1/02

(54) **MICROFIBRILLATED CELLULOSE AS RHEOLOGY MODIFIER IN ADHESIVES**

(71) Applicant: Borregaard AS, 1721 Sarpsborg (NO)
(72) Inventor: Berg, Jan, 1701 Sarpsborg (NO); HOLTAN, Synnove, 1701 Sarpsborg (NO); LIAPIS, Katérina, 1701 Sarpsborg (NO)
(74) Representative: Wallinger Ricker Schlotter Tostmann

(57) **Abstract**

The present invention relates to starch-based adhesive compositions comprising microfibrillated cellulose ("MFC"). In addition to microfibrillated cellulose, these adhesive compositions comprise at least one starch and/or at least one starch derivative, in particular dextrin.

## Description

### FIELD OF THE INVENTION

The present invention relates to starch-based adhesive compositions comprising microfibrillated cellulose ("MFC"). In addition to microfibrillated cellulose, these adhesive compositions comprise at least one starch and/or at least one starch derivative, in particular dextrin.

The present invention also relates to a process for making MFC-modified starch (derivative)-based adhesives.

The present invention also relates to the use of MFC as a rheology modifying additive in adhesive compositions, in particular in adhesive compositions comprising at least one starch and/or at least one starch derivative, in particular dextrin. The use of these MFC-modified and starch-based adhesives in the manufacture of corrugated cardboards is particularly preferred.

### BACKGROUND OF THE INVENTION

Starch-based adhesives (or adhesives based on starch derivatives) are generally known, in particular in the paper industries.

For example, US 3 434 901 discloses a suspension of raw or uncooked starch in a suitable liquid carrier. For example, raw corn, tapioca or potato starch, comprising up to 40% by weight of the adhesive, suspended in a carrier consisting of water and smaller amounts of cooked starch, borax and caustic soda would constitute a typical raw starch formulation. In this state, the starch has limited or no adhesive qualities. However, at a certain temperature, dependent upon the type of starch utilized and the kind and amount of additives dissolved in the carrier, the starch granules will absorb the liquid of suspension available and swell, causing gelation of the suspension. In this state the starch has superior adhesion abilities and will form a bond between many substrates, including paper.

US 2,884,389 and US 2,886,541 disclose that a starch based corrugating adhesive can be produced that is highly water resistant or waterproof in nature. These two patents disclose reacting phenolic compounds, such as resorcinol, with an aldehyde, such as formaldehyde, under alkaline conditions in the presence of pasted starch so as to form in situ a phenolic-aldehyde resin-starch reaction product. The teaching of these two patents has been employed on a commercial scale in the production of highly water-resistant to waterproof corrugated and laminated paperboard products. US 3,294,716 teaches the addition of borax to the general phenol-aldehyde-starch formula, along with the reduction of concentration of the phenolic compound, to reduce costs and increase machine speed rates for particular corrugated paperboard products that do not require a high degree of water resistance.

However, despite further developments regarding the formulation of starch based adhesives (or adhesives based on starch derivatives), the viscosity is commonly not stable enough over extended periods of time, in particular over a longer period of storage, nor is it stable under high shear. This is a problem for the use of starch (derivative)-based adhesives in various areas of application, in particular for making corrugated cardboards, i.e. in the process of gluing different paper sheets together.

Paper used for cardboards is typically more absorbent than paper used for other purposes which means that the water content in any adhesive used to bond these types of paper together should ideally be comparatively low and/or the adhesive should be formulated to not overly penetrate into the absorbent patent. This requirement may lead to further requirements in regard to controlling the overall viscosity.

### SUMMARY OF THE PRESENT INVENTION

Based on the problems outlined above and in view of the prior art, it is an object of the present invention to provide starch based adhesives (or adhesives based on starch derivatives) that allow for improved viscosity control and avoid or minimize any of the disadvantages outlined above.

In accordance with a **first aspect** of the present invention, this problem and others is/are solved by an adhesive composition comprising:
- at least one starch and/or at least one starch derivative, in an amount of 5% w/w to 60% w/w, dry matter, of the overall adhesive composition;
- at least one solvent, said solvent preferably comprising or consisting of water, in an amount of 30% w/w to 95% w/w of the overall adhesive composition;
- microfibrillated cellulose in an amount of 0.01 % w/w to 10 % w/w, dry matter, of the overall adhesive composition.

In embodiments of the invention, the amount of microfibrillated cellulose in said composition is from 0.01% dry matter to 10%, preferably from 0.05% to 5%, further preferably from 0.05 % to 2%, most preferred from 0.05 % to 0.15%.

In accordance with the present invention, the term "dry matter" (also: "solids content") refers to the amount of microfibrillated cellulose (and/or starch) remaining if all the solvent (typically water) is removed. The amount is then calculated as weight % relative to the overall weight of the adhesive composition (including solvent, starch and other adjuvants, if present).

In embodiments of the invention, the amount of solvent is from 30% to 80%, further preferably from 40% to 75%, w/w, relative to the overall adhesive composition.

In embodiments of the invention, the amount of starch and/or starch derivative is from 10% to 50%, dry matter, further preferably from 15% to 35%, w/w, relative to the overall adhesive composition.

Unless explicitly stated otherwise, all ranges or values given for the amount of any component in the compositions of the present invention are meant to be given in weight% of the component relative to the overall weight of the adhesive composition ("w/w").

The adhesive compositions according to the present inventions may comprise other components, in particular caustic soda, borax and/or at least one preservative.

In accordance with the present invention, an "***adhesive***" is understood to be a material that is applied to the surfaces of articles to join these surfaces permanently by an adhesive bonding process. An adhesive is a substance capable of forming bonds to each of the two parts, wherein the final object consists of two sections that are bonded together. A particular feature of adhesives is the relatively small quantities that are required compared to the weight of the final object.

In accordance with the present invention, a ***starch*** is a polymeric carbohydrate consisting of a large number of glucose units joined by glycosidic bonds. Preferred sources for starch are potatoes, wheat, maize (corn), rice, tapioca and sago, among others.

In accordance with the present invention, a ***modified starch*** is a starch that has been chemically modified, for example by hydrolysis. Preferred modified starches in embodiments of the present invention are dextrins.

In embodiments of the present invention, the starch preferably is unmodified wheat starch, but can be any of the starches commonly used in an adhesive, that is, all starches and derivatives, which contain sufficient available hydroxyl groups so that a copolymerization reaction can occur between them and other reactants.

**Microfibrillated cellulose** (also known as *"reticulated"* cellulose or as *"superfine"* cellulose, or as "*cellulose nanofibrils",* among others) is a cellulose-based product and is described, for example, in US 4 481 077, US 4 374 702 and US 4 341 807. In accordance with the present invention, microfibrillated cellulose has at least one reduced length scale (diameter, fiber length) vis-à-vis non-fibrillated cellulose. In (non-fibrillated) cellulose, which is the starting product for producing microfibrillated cellulose (typically present as a "*cellulose pulp*"), no, or at least not a significant or not even a noticeable portion of individualized and "*separated*" cellulose *"fibrils"* can be found. The cellulose in wood fibres is an aggregation of fibrils. In cellulose (pulp), elementary fibrils are aggregated into microfibrils which are further aggregated into larger fibril bundles and finally into cellulosic fibres. The diameter of wood based fibres is typically in the range 10-50 µm (with the length of these fibres being even greater). When the cellulose fibres are microfibrillated, a heterogeneous mixture of "released" fibrils with cross-sectional dimensions and lengths from nm to µm may result. Fibrils and bundles of fibrils may coexist in the resulting microfibrillated cellulose. The diameter of the microbrillated cellulose of the present invention is typically in the nanometer range.

In the microfibrillated cellulose ('MFC') as described throughout the present disclosure, individual fibrils or fibril bundles can be identified and easily discerned by way of conventional optical microscopy, for example at a magnification of 40 x.

In accordance with a **second aspect** of the present invention, the above-mentioned problem and others is/are solved by a **process** for preparing a starch-based adhesive, or an adhesive based on a starch derivative, which process comprises the steps of:
(i) mixing at least one starch and/or at least one starch derivative with at least one solvent, in particular a solvent comprising or consisting of water, to result in mixture having a predetermined viscosity;
(ii) optionally adding one or more additives to the mixture from (i)
(iii) during or after step (i) or during or after optional step (ii): adding 0.1 % to 25% w/w of microfibrillated cellulose, relative to the overall weight of the mixture from step (i) or from step (ii), preferably 0.5% to 10%, in a solvent, to said mixture, wherein the solids content of said microfibrillated cellulose in said solvent is from 1 % dry weight, relative to the weight of the solvent, to 20%, preferably 2% to 10% dry weight, and:
   dispersing the microfibrillated cellulose until a homogeneous mixture is obtained.

In embodiments of the present invention, the viscosity of the mixture increases by at least 10%, preferably at least 25%, further preferably by at least 35%, in step (iii) and relative to viscosity of the mixture of step (i) or step (ii).

The viscosity is provided as the "Lory viscosity" in units of "seconds" and determined by the following method. Lory viscosity is measured with a Lory viscosity cup (Elcometer 2215). This device consists of a conventional cylindrical cup with a needle fixed to the bottom. The cup is first dipped into the adhesive, which then empties through an escape hole. The flow time is measured as soon as the point of the needle is discernible.

In embodiments of the present invention, caustic soda and/or borax is/are added as part of step (ii), in order to initiate at least partial swelling of the starch and/or the starch derivative.

In embodiments of the present invention, in step (i), first a primary starch is added to a predetermined amount of solvent until a predetermined viscosity is achieved in step (i) or in step (ii), then, second, secondary starch (a second amount of the same or of different starch or starch derivative) is added, preferably secondary starch and borax are added.

In embodiments of the present invention, the pH value of the final adhesive composition is from 8 to 14, preferably from 10 to 13, further preferably from 11.5 to 12.5.

In accordance with a **third aspect** of the present invention, the above-mentioned problem and others is/are solved by providing microfibrillated cellulose for use as a rheology modifying agent in adhesives comprising starch and/or starch derivatives.

Without wishing to be bound by theory, it is believed that the addition of microfibrillated cellulose to a starch (derivative)-based adhesive leads to a network structure based on physical and/or chemical interactions between the microfibrillated cellulose units and the starch (derivative) units by way of hydrogen bonding. It is believed that microfibrillated cellulose is an efficient thickener in polar solvent systems, in particular in water, and builds large three dimensional networks of fibrils which are stabilized by hydrogen bonds.

These fibrils have hydroxyl groups on the surface that are dissociated (O) at the high pH prevailing in starch adhesives, this leading to intra and inter-particular interactions. As described above, starch is composed of amylose and amylopectin. Amylose is a helical linear polymer composed of α(1→4)-bound D-glucose units, with hydroxyl groups which are pointed towards outside the helix. The fibril network of microfibrillated cellulose is believed to interact through hydrogen bonding with those groups, building up a protective layer around the amylose chains, thus protecting the starch against high shear degradation and stabilizing the viscosity. Overall, MFC is a network of entangled fibrils that can entrap starch molecule and in that way strengthen the starch composition.

Furthermore, again without wishing to be bound by theory, the water holding capacity of microfibrillated cellulose is believed to prevent water from migrating to and through the paper. Therefore, adding microfibrillated cellulose to starch (derivative) based adhesives is particularly useful for the manufacture of corrugated cardboard, where water migration out of the adhesive into the paper destabilizes the final cardboard product and may lead to warp and delamination, among others.

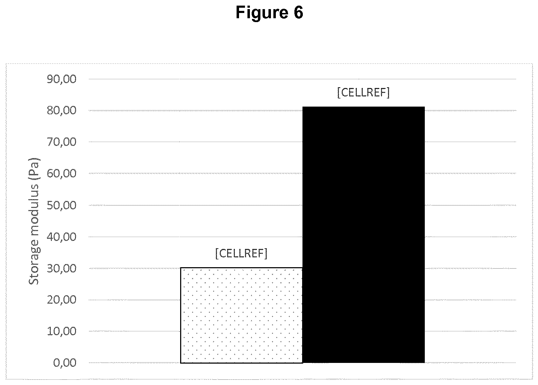

In accordance with the present invention, using the composition according to the first aspect, or the composition as obtained in the method of the second aspect, in the manufacture of cardboards results in at least one of the following advantages, preferably essentially all of the following advantages:
- Microfibrillated cellulose is well dispersible in starch (derivative)-based adhesives
- Microfibrillated cellulose can be used to adjust the viscosity of the final adhesive and stabilize the same over time, in particular during storage and also in regard to resistance under high shear
- Microfibrillated cellulose provides flexibility for viscosity corrections at any stage of the process
- Microfibrillated cellulose is thixotropic (i.e. shows shear thinning), higher overall viscosity can be tolerated
- Microfibrillate cellulose shows shear thinning, which improves adhesive application properties
- Microfibrillated cellulose increases the storage modulus of the adhesive (see **Figure 6**)
- Microfibrillated cellulose provides viscosity stability over time, in particular over a longer period of storage
- Microfibrillated cellulose provides viscosity stability under high shear impact
- Experiments on a line for making corrugated cardboard have shown that using a starch based adhesive comprising microfibrillated cellulose (as described below in the Examples Section) leads to an increase in production speed of 37% to achieve equal or better quality cardboard
- Microfibrillated cellulose improves the quality of the board by reducing water defects thanks to the advantageous water retention properties of microfibrillated cellulose, thus preventing water from penetrating into the board, which means that flatter boards are obtained, thus increasing speed of the post process steps (printing, cutting, stacking).

Therefore, in accordance with a **fourth aspect** of the present invention, the above-mentioned problem and others is/are solved by using the composition according to the first aspect, or the composition as obtained in the method of the second aspect, in the manufacture of corrugated paper boards/ card boards.

### DETAILED DESCRIPTION OF THE INVENTION

In accordance with the present invention and as further specified in STM D 907-82, Standard Definitions of Terms Relating to Adhesives, published in Volume 15.06 - Adhesives, 1984 Annual Book of ASTM Standards, an "***adhesive***" is understood to be a material that is applied to the surfaces of articles to join these surfaces permanently by an adhesive bonding process. An adhesive is a substance capable of forming bonds to each of the two parts when the final object consists of two sections that are bonded together. A particular feature of adhesives is the relatively small quantities that are required compared to the weight of the final objects.

In accordance with the present invention, a ***starch*** (also known as "amylum") is a polymeric consisting of a large number of glucose units joined by glycosidic bonds. Starch is found in large amounts in foods such as potatoes, wheat, maize (corn), rice, tapioca and sago, among others. Starch typically comprises two types of molecules: the linear and helical amylose and the branched amylopectin. Depending on the plant, starch generally contains 20 to 25% amylose and 75 to 80% amylopectin by weight.

While amylopectin can be supplied in cold-water-soluble form, amylose is generally insoluble. Amylose can be dissolved with strong alkali, for example by cooking with formaldehyde or by cooking in water at 150-160°C under pressure. Upon cooling or neutralization, such amylose dispersions typically form gels at concentrations higher than 2% and will precipitate at concentrations lower than 2%. Amylose fractions are never truly soluble in water and in time will form crystalline aggregates by hydrogen bonding - a process known as retrogradation, or setback. Retrogradation is the cause of viscosity instability mentioned above and found to a varying degree in starch-based adhesives. Amylopectin is more soluble and less prone to retrogradation.

In embodiments of the present invention, the starch preferably is unmodified wheat starch, but can be any of the starches commonly used in the adhesive art, that is, all starches and derivatives, in particular dextrins which contain sufficient available hydroxyl and/or functional groups so that a copolymerization reaction can occur between them and the other two reactants.

A ***modified starch*** is a starch that has been chemically modified, for example by hydrolysis, to allow the starch to function properly under conditions frequently encountered during processing or storage, such as high heat, high shear, high pH, freeze/thaw and cooling. Preferred modified starches in embodiments of the present invention are dextrins.

***Dextrins*** are a group of low-molecular-weight carbohydrates produced by the hydrolysis of starch or glycogen. Dextrins are mixtures of polymers of D-glucose units linked by α-(1→4) or α-(1→6) glycosidic bonds. Dextrins can be produced from starch using enzymes like amylases or, for example, by applying dry heat under acidic conditions (pyrolysis). Dextrins produced by heat are also known as **pyrodextrins.** Dextrins are partially or fully water-soluble and typically yield solutions of low viscosity.

As outlined above, in a second aspect, the present invention relates to a process for preparing a starch-based adhesive, or an adhesive based on a starch derivative.

Most starches contain 20-30% by weight of amylose, although certain specialty types can have as little as 0% or as high as 80%. Because of the amylose fraction, starch suspended in cold water is initially unable to act as an adhesive because the starch is so tightly bound in crystalline regions. These granules must be opened through processing to obtain adhesive bonding. Heating in water is the simplest method of breaking up starch granules. On heating in water, starch granules first swell and then burst open with a resulting thickening of the suspension. The temperature at which this thickening of the suspension occurs is called the gelation temperature.

In embodiments of the present invention, the maximum temperature reached in step (i) is 37 degrees Celsius. In embodiments of the present invention, the maximum temperature reached in step (ii) is 35 degrees Celsius

The process may comprise the following. In a first embodiment, salts (preferably the chlorides of metals such as calcium, magnesium and zinc) are added to a suspension of the starch (derivative) in the solvent, and the adhesive is produced by controlling temperature and viscosity by way of controlling the time of stirring.

In case caustic soda is added to the starch suspension; the product may be neutralized with acid (buffer) later in the process.

In embodiments of the present invention, (modified) starch-based adhesives are formulated with at least one sodium tetraborate ("borax"), as added in step (ii) or in step (iii). Borax typically provides good adhesion (tack) and machining properties. Borax is generally added in amounts of up to 10% w/w, based on the weight of the dry starch. Sodium hydroxide is preferably added to convert the borax to the more active sodium metaborate.

Plasticizers are sometimes used to control brittleness of the adhesive line and to regulate the speed of drying. Common plasticizers include glycerin, glycols, sorbitol, glucose and sugar. These types of plasticizers may act as a hygroscopic agent to decrease the drying rate of the film. Plasticizers based on saps, polyglycols and sulfonated oil derivates lubricate the layers within the dried adhesive and, thus, impart flexibility. Urea, sodium nitrate, salicylic acid and formaldehyde plasticize by forming a solid solution with the dried adhesive. All of these additives, any combination thereof, or only one such additive, may added in step (i) or in step (ii).

In embodiments of the present invention, further additives may be used, such as calcium chloride, urea, sodium nitrate, thiourea and guanidine salts are used as liquefiers to reduce viscosity. These additives may be added at about 5-20% based on dry starch. Improved cold-water resistance may be achieved by adding polyvinyl alcohol or polyvinyl acetate blends. These adhesives will also dissolve in hot water, which is often a benefit. Optimal moisture resistance may be achieved through the addition of thermosetting resins, such as urea formaldehyde or resorcinol formaldehyde.

Mineral fillers, such as kaolin clay, calcium carbonate and titanium dioxide, may be added in step (i), step (ii) or after step (iii), to reduce cost and control penetration into porous substrates. These additives may be added at concentrations of 5-50%.

Other additives that may be added in step (i), step (ii) or after step (iii), include but are not limited to preservatives, bleaches, and defoamers. Preservatives that are preferred to prevent microbial activity include formaldehyde (35% solids) at 0.02-1.0%, copper sulfate at about 0.2%, zinc sulfate, benzoates, fluorides and phenols. Preferred bleaching agents include sodium bisulfite, hydrogen and sodium peroxide, and sodium perborate. Organic solvents may be added to improve adhesion to waxed surfaces.

As discussed above in the third and fourth aspect, microfibrillated cellulose may be advantageously used to modify the rheology of adhesives, in particular starch based (or starch derivative based) adhesives. This use is particularly advantageous for making corrugated cardboards (boxboards).

Most corrugated boxboard for making cartons is bonded with starch-based adhesives. A fraction of the starch needed to formulate the adhesive is swelled or gelatinized with aqueous caustic. This is blended with a concentrated suspension of unmodified starch. A typical starch-adhesive formulation also includes borax (to increase wet tack and speed curing), and a small quantity of preservatives (for use as a mold inhibitor). The paste is applied to the corrugated flutes and the liners. Upon subsequent exposure to heat, the starch granules swell and burst, forming a strong bond.

Experiments on a line for making corrugated cardboard have shown that using a starch based adhesive comprising microfibrillated cellulose (as described below in the Examples Section) leads to the following advantages, among others:
- an increase in production speed of up to 40%, while achieving equal or better quality cardboard, thus saving time and facilitating the post process steps due to flatter boards.
- an increase in bond strength between the flute and liners of the board.

This translates to saving time and processing costs [less heat (energy) needed for curing due to less water to evaporate when less adhesive is applied; deduced water impact/defects/warp on the paper during process and post process: achieves flatter cardboards].

*"Microfibrillated cellulose"* (MFC) in accordance with the present invention is to be understood as relating to cellulose fibers that have been subjected to a mechanical treatment resulting in an increase of the specific surface and a reduction of the size of cellulose fibers, in terms of cross-section (diameter) and/or length, wherein said size reduction preferably leads to *"fibrils"* having a diameter in the nanometer range and a length in the micrometer range.

Microfibrillated cellulose (also known as *"reticulated"* cellulose or as *"superfine"* cellulose, or as "*cellulose nanofibrils",* among others) is a cellulose-based product and is described, for example, in US 4 481 077, US 4 374 702 and US 4 341 807. According to US 4 374 702 ("*Turbak*"), microfibrillated cellulose has distinct properties vis-à-vis cellulose products not subjected to the mechanical treatment disclosed in US 4 374 702. In particular, the microfibrillated cellulose described in these documents has reduced length scales (diameter, fiber length), improved water retention and adjustable viscoelastic properties. MFC with further improved properties and/or properties tailor-made for specific applications is known, among others, from WO 2007/091942 and WO 2015/180844.

In cellulose, which is the starting product for producing microfibrillated cellulose (typically present as a "*cellulose pulp*"), no, or at least not a significant or not even a noticeable portion of individualized and "*separated*" cellulose *"fibrils"* can be found. The cellulose in wood fibres is an aggregation of fibrils. In cellulose (pulp), elementary fibrils are aggregated into microfibrils which are further aggregated into larger fibril bundles and finally into cellulosic fibres. The **diameter** of wood based **fibres** is typically in the range 10-50 µm (with the length of these fibres being even greater). When the cellulose fibres are microfibrillated, a heterogeneous mixture of "released" fibrils with cross-sectional dimensions and lengths from nm to µm may result. Fibrils and bundles of fibrils may coexist in the resulting microfibrillated cellulose.

In the microfibrillated cellulose ('MFC') as described throughout the present disclosure, individual fibrils or fibril bundles can be identified and easily discerned by way of conventional optical microscopy, for example at a magnification of 40 x.

In principle, any type of microfibrillated cellulose (MFC) can be used in accordance with the present invention, as long as the fiber bundles as present in the original cellulose pulp are sufficiently disintegrated in the process of making MFC so that the average diameter of the resulting fibers/fibrils is in the nanometer-range and therefore more surface of the overall cellulose-based material has been created, vis-à-vis the surface available in the original cellulose material. MFC may be prepared according to any of the processes described in the art, including the prior art specifically cited in the "Background"-Section above.

In accordance with the present invention, there is no specific restriction in regard to the origin of the cellulose, and hence of the microfibrillated cellulose. In principle, the raw material for the cellulose microfibrils may be any cellulosic material, in particular wood, annual plants, cotton, flax, straw, ramie, bagasse (from sugar cane), suitable algae, jute, sugar beet, citrus fruits, waste from the food processing industry or energy crops or cellulose of bacterial origin or from animal origin, e.g. from tunicates.

In a preferred embodiment, wood-based materials are used as raw materials, either hardwood or softwood or both (in mixtures). Further preferably softwood is used as a raw material, either one kind or mixtures of different soft wood types. Bacterial microfibrillated cellulose is also preferred, due to its comparatively high purity.

In principle, the microfibrillated cellulose in accordance with the present invention may be unmodified in respect to its functional groups or may be physically modified or chemically modified, or both.

Chemical modification of the surface of the cellulose microfibrils may be achieved by various possible reactions of the surface functional groups of the cellulose microfibrils and more particularly of the hydroxyl functional groups, preferably by: oxidation, silylation reactions, etherification reactions, condensations with isocyanates, alkoxylation reactions with alkylene oxides, or condensation or substitution reactions with glycidyl derivatives. Chemical modification may take place before or after the defibrillation step.

The cellulose microfibrils may, in principle, also be modified by a physical route, either by adsorption at the surface, or by spraying, or by coating, or by encapsulation of the microfibril. Preferred modified microfibrils can be obtained by physical adsorption of at least one compound. The MFC may also be modified by association with an amphiphilic compound (surfactant).

However, in preferred embodiments, the microfibrillated cellulose is not physically modified.

In a preferred embodiment of the present invention, the microfibrillated cellulose as used in step (iii) is prepared by a process, which comprises at least the following steps:
(a) subjecting a cellulose pulp to at least one **mechanical pretreatment step;**
(b) subjecting the mechanically pretreated cellulose pulp of step (a) to a **homogenizing step,** which results in fibrils and fibril bundles of reduced length and diameter vis-à-vis the cellulose fibers present in the mechanically pretreated cellulose pulp of step (a), said step (b) resulting in microfibrillated cellulose;
   wherein the homogenizing step (b) involves compressing the cellulose pulp from step (a) and subjecting the cellulose pulp to a pressure drop.

The **mechanical pretreatment** step preferably is or comprises a **refining step.** The purpose of the mechanical pretreatment is to "beat" the cellulose pulp in order to increase the accessibility of the cell walls, i.e. to increase the surface area.

A refiner that is preferably used in the mechanical pretreatment step comprises at least one rotating disk. Therein, the cellulose pulp slurry is subjected to shear forces between the at least one rotating disk and at least one stationary disk.

Prior to the mechanical pretreatment step, or in addition to the mechanical pretreatment step, **enzymatic (pre)treatment** of the cellulose pulp is an optional additional step that may be preferred for some applications. In regard to enzymatic pretreatment in conjunction with microfibrillating cellulose, the respective content of WO 2007/091942 is incorporated herein by reference. Any other type of pretreatment, including chemical pretreatment is also within the scope of the present invention.

In the **homogenizing step (b),** which is to be conducted after the (mechanical) pretreatment step, the cellulose pulp slurry from step (a) is passed through a *homogenizer* at least once, preferably at least two times, as described, for example, in PCT/EP2015/001103, the respective content of which is hereby incorporated by reference.

### EXAMPLES

### Example 1:

### Preparation of Microfibrillated Cellulose (MFC)

MFC as used to make the compositions in accordance with the present invention is commercially available and commercialized, for example, by *Borregaard* as "*Exilva Microfibrillated cellulose P01-V*", *based on* cellulose pulp from Norwegian spruce (softwood).

The MFC used in the example was present as a paste, having a solids content of 10%, i.e. the dry matter content of microfibrillated fibers in the MFC paste was 10 %, while the remaining 90% were water, which was the sole solvent in this case.

### Example 2:

### Preparation of a starch based adhesive comprising borax (comparative example)

A starch-based adhesive as known from the art was prepared based on the following
components and using the following steps:
   750 kg of primary water
   180 kg of primary starch (wheat)
Stirring for 30 sec, temperature 36.5°C; add:
   100 kg of water
   16.5 kg Primary caustic soda
   80 kg of water
Stirring for 30 sec
Viscosity control 1: 10 sec
Stirring for 840 sec
Viscosity control 2: 33.8 sec
   260 kg secondary water
   Disinfectant: 0.4kg
   280 kg secondary starch (wheat)
Stirring for 30 sec at a temperature of 35°C
2.5 kg of borax
Stirring for 600 sec
Viscosity control 3, final: 28 sec

Borax was added after the addition and mixing of the secondary non-swollen starch. The concentration of borax in the final formulation was 0.15%. The Lory viscosity of this starch-based adhesive according to the art including borax was decreasing readily with mixing time, at high shear.

### Preparation of a starch based adhesive comprising microfibrillated cellulose (in accordance with the present invention)

A starch-based adhesive in accordance with the present invention was prepared based
on the following components and using the following steps:
   750 kg of primary water
   180 kg of primary wheat starch
Stirring for 30 sec, temperature 36.5°C
   100 kg of water
   16.5 kg Primary caustic soda
   80 kg of water
Stirring for 30 sec
Viscosity control 1: 10 sec
Stirring for 840 sec
Viscosity control 2: 33.8 sec
   260 kg secondary water
   Disinfectant: 0.4kg
Temperature 35°C
   280 kg secondary wheat starch
Stirring for 30 sec
   2.5 kg of borax
Stirring for 60 sec
   20 kg of MFC (Exilva P01-V)
Stirring for 600 sec
   21 kg of water
Viscosity control 3, final: 32 sec
Lory viscosity was 34.

The adhesive consisted of a primary starch portion in which most of the granules are partially swollen, in which uncooked raw starch was suspended. Microfibrillated cellulose was added under high speed stirring (1500 rpm), after the addition and inmix of the borax. The concentration of MFC in the final formulation was 0.12%.

Lory viscosity was measured with a Lory viscosity cup (Elcometer 2215), which is commonly used in the adhesive, paint and coatings industry and which essentially consists of a conventional cylindrical cup with a needle fixed to the bottom. The cup is first dipped into the adhesive, which then empties through an escape hole. The flow time was measured as soon as the point of the needle was visible.

### Stability test over time

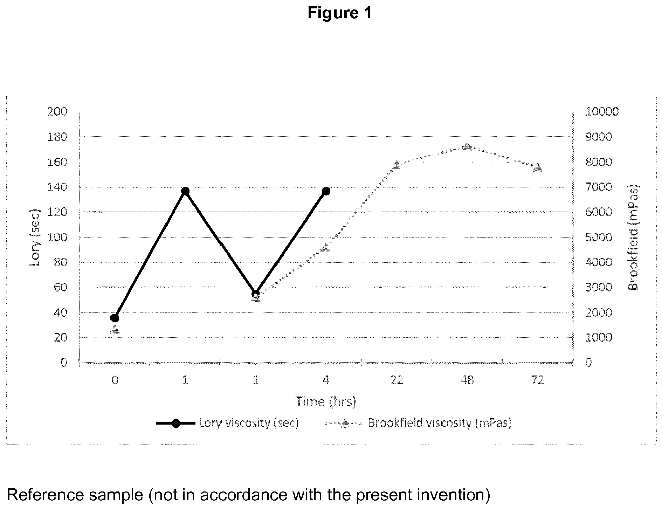

Both for the reference and the starch-based adhesive with MFC, the Lory viscosity and Brookfield viscosity were measured initially, and over time under laboratory conditions, i.e. at 20°C and under standard ambient conditions. The samples were left on the bench without stirring. For the reference adhesive, the initial Lory viscosity was 36 seconds. After 1 hour, the viscosity was 137 seconds (critical viscosity), and the reference adhesive could no longer be measured by Lory viscosity without being pre-stirred for 30 seconds by a propeller mixer. After 4 hours, the viscosity of the reference adhesive was too high to be measured by Lory viscosity, even with 30 seconds pre-stirring (see **Figure 1**).

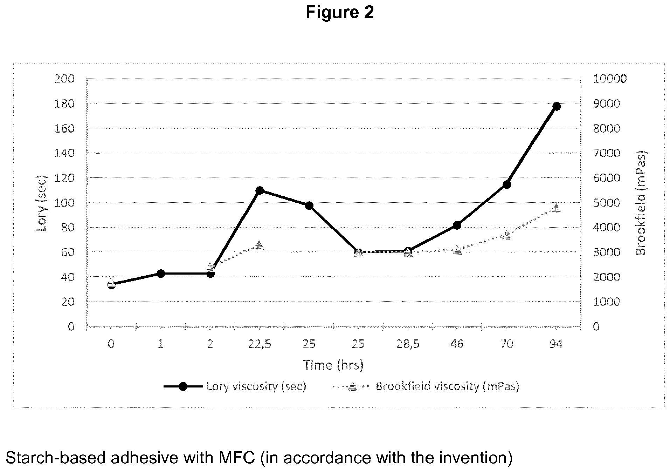

For the starch-based adhesive in accordance with the present invention, i.e. the adhesive with MFC, the initial Lory viscosity was 34 and only increased to 43 seconds 1 and 2 hours after preparation. Moreover, the Lory viscosity was still measureable 22.5 hours after preparation and the critical viscosity limit for measuring Lory viscosity was not reached before 25 hours after preparation. After 25 hours, pre-stirring with propeller mixer for 30 seconds had to be performed before the measurements. The final measurement of Lory viscosity was performed 94 hours after the adhesive was prepared (see **Figure 2**).

Brookfield viscosity measurements for the reference starch-based adhesive and the starch-based adhesive with MFC, likewise show a slower increase in viscosity over time with MFC added to the starch-based adhesive (see **Figures 1** **and** **2**). Brookfield viscosity was measured with Brookfield Viscometer- RVT model, spindle no. 4.

Overall, the viscosity measurements consistently demonstrate that the starch-based adhesive comprising microfibrillated cellulose is far more stable in regard to viscosity and over time than the reference starch-based adhesive without microfibrillated cellulose.

### Example 3:

### Testing the starch based adhesive in accordance with the present invention in corrugated cardboards

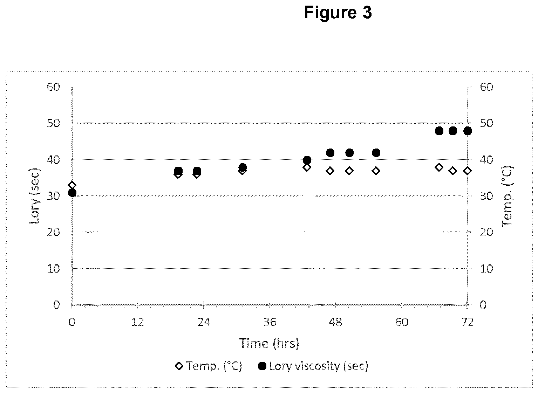

The Lory viscosity and temperature for the starch-based adhesive with MFC were also measured over time in the storage tank, see **Figure 3****.** To prevent sedimentation and reduce the viscosity of the starch-based adhesives, the glues are stirred for 5 minutes every hour. For the starch-based adhesive with MFC the sufficient time between the stirring was tested: The first 24 hours of storage, the adhesive was stirred for 5 minutes every hour, after 24-48 hours the stirring was 5 minutes every third hour, and from 48-72 hours the adhesive was stirred for 5 minutes every fourth hour. Compared to the reference starch-based adhesive, the frequency of stirring during storage was significantly reduced for the adhesive with MFC.

The Lory viscosity of the starch-based adhesive with MFC was measured to be 48 seconds after 72 hours storage in tank and the starch-based adhesive could be used directly without adjustment with water for the production of corrugated boards. The temperature of the starch-based adhesive in the tank was 37° C (see **Figure 3**).

Both the starch-based adhesive with MFC (72 hours) and the reference starch-based adhesive (fresh) were tested on quality BB25b.

**Table 1. Standard tests**

| **Conditions** | **Grammage** | **Adhesion strength** |
|---|---|---|
| 23°C - 50RH % | g/m² | N/m |
| ISO 187 | ISO 536 | Fefco nr.11 |

As for making corrugated cardboards, a corrugator was used, which is a set of machines designed to bring together several sheets of paper to form single, double or triple wall board in a continuous process. The process starts with a paper sheet conditioned with heat and steam in order to be given its fluted shape in the single facer.

Starch-based adhesive is then applied to the tips of the flutes on one side and the inner liner is glued to the fluting. The corrugated fluting medium with one liner attached to it (single face web) is then brought to the double backer where the outer liner is glued to the single face web.

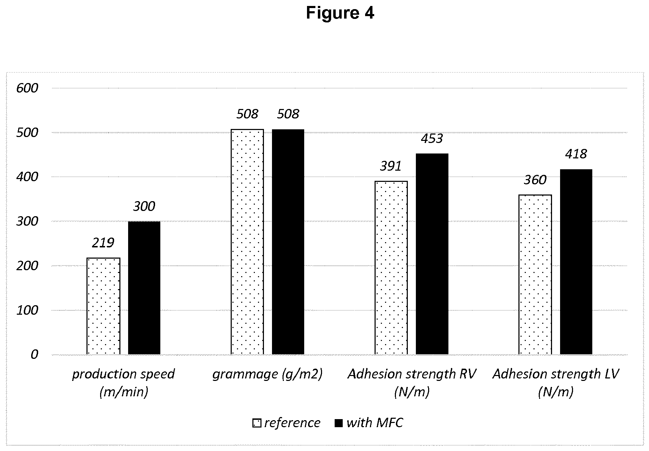

**Figure 4** shows a comparison of the grammage and adhesion strength of corrugated boards, using the reference starch-based adhesive run at 219 m/min (left column) compared to the starch-based adhesive *with MFC* run at 300 m/min (right column, respectively).

It is noteworthy that the reference adhesive tested was a fresh glue made the same day as the corrugated boards production, while the glue with MFC was 72 hours old and was used with no addition of water.

It can be seen from **Figure 4** that the starch-based adhesive containing MFC provides greater adhesion strength to the corrugated boards (on both sides, inner and outer liner, respectively RV and LV), even when the production is run 37% faster. Since the grammage of the cardboard was similar for both adhesives, the improvement of the adhesion strength can be compared and improvements can be attributed to the better performance of the starch-based adhesive with MFC. It was also observed that the boards produced with the MFC starch-based adhesive were flatter than the boards produced with the reference starch adhesive.

Overall, the viscosity of the starch-based adhesive with MFC is unexpectedly stable over a long period of time, in particular during storage (at least 72 hours) contrary to a starch-based adhesive without MFC, the viscosity of which increases dramatically already after 1 hour.

Moreover, the starch-based adhesive with MFC is usable for corrugated board production even after 72 hours storage and performs even better than a fresh made reference at high speed production. Therefore production can be run at faster speeds, while better quality and flatter boards are obtained.

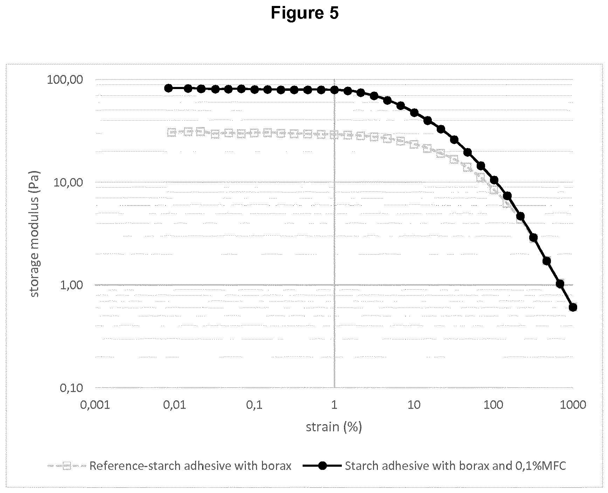

Finally, as can be seen from **Figure 5** (upper curve: starch based adhesive with borax and microfibrillated cellulose; lower curve: starch-based adhesive with borax but no microfibrillated cellulose) and from **Figure 6** (left column: no microfibrillated cellulose), using microfibrillated cellulose as an additive increases the storage modulus.

## Claims

1. Adhesive composition comprising:
• at least one starch and/or at least one starch derivative, in an amount of 5% w/w to 60% w/w, dry matter, of the overall adhesive composition;
• at least one solvent, said solvent preferably comprising or consisting of water, in an amount of 30% w/w to 95% w/w of the overall adhesive composition;
• microfibrillated cellulose in an amount of 0.01 % w/w to 10 % w/w, dry matter, of the overall adhesive composition.

2. Composition according to claim 1, wherein the amount of microfibrillated cellulose in said composition is from 0.01% dry matter, relative to the overall weight of the composition to 10%, preferably from 0.05% to 5%, further preferably from 0.05 % to 2%, most preferred from 0.05 % to 0.15%.

3. Composition according to claim 1 or claim 2, wherein the at least one starch derivative is dextrin.

4. Composition according to any of the preceding claims, wherein the pH value of the adhesive composition is from 8 to 14, preferably from 10 to 13, further preferably from 11.5 to 12.5.

5. Process for preparing a starch-based adhesive, or an adhesive based on a starch derivative, which process comprises the steps of:
(i) mixing at least one starch and/or at least one starch derivative with at least one solvent, in particular a solvent comprising or consisting of water, to result in mixture having a predetermined viscosity;
(ii) optionally adding one or more additives to the mixture from (i)
(iii) during or after step (i) or during or after optional step (ii): adding 0.1 % to 25% w/w of microfibrillated cellulose, relative to the overall weight of the mixture from step (i) or from step (ii), preferably 0.5% to 10%, in a solvent, to said mixture, wherein the solids content of said microfibrillated cellulose in said solvent is from 1% dry weight, relative to the weight of the solvent, to 20%, preferably 2% to 10% dry weight, and:
dispersing the microfibrillated cellulose until a homogeneous mixture is obtained.

6. Process according to claim 5, wherein the viscosity of the mixture increases by at least 10%, preferably at least 25%, further preferably by at least 35%, in step (iii) and relative to viscosity of the mixture of step (i) or step (ii).

7. Process according to claim 5 or claim 6, wherein in step (i), first a primary starch is added to a predetermined amount of solvent until a predetermined viscosity is achieved, then, in step (ii), a secondary starch i.e. a second amount of the same or of different starch or starch derivative, is added.

8. Use of microfibrillated cellulose as a rheology modifying agent in adhesives comprises starch and/or starch derivatives.

9. Use of the adhesive composition from any of claims 1 - 4 or of the adhesive composition as obtained according to a process from claims 5 - 7 for the manufacture of corrugated paper boards/ card boards.
